Europäisches Patentamt

European Patent Office

Office européen des brevets

(11) Publication number: 0 209 989 B1

# EUROPEAN PATENT SPECIFICATION

(45) Date of publication of patent specification: 13.05.92  (51) Int. Cl.5: H01Q  1/32, H04B 7/08

(21) Application number: 86304853.4

(22) Date of filing: 24.06.86

(54) Vehicle antenna system.

(30) Priority: 28.06.85 JP 143090/85
          28.06.85 JP 143093/85

(43) Date of publication of application:
      28.01.87 Bulletin  87/05

(45) Publication of the grant of the patent:
      13.05.92 Bulletin  92/20

(84) Designated Contracting States:
      AT CH DE FR GB LI SE

(56) References cited:
      EP-A- 187 446          EP-A- 0 181 120
      EP-A- 0 183 443        EP-A- 0 183 520
      EP-A- 0 191 233        EP-A- 0 206 775

      PATENT ABSTRACTS OF JAPAN, vol. 8, no.
      135 (E-252)[1572], 22nd June 1984; & JP-A-59
      44 132 (TOKYO SHIBAURA DENKI K.K.)
      12-03-1984

      PATENT ABSTRACTS OF JAPAN, vol. 8, no.
      155 (E-256)[1592], 19th July 1984; & JP-A-59
      57 503 (MATSUSHITA DENKI SANGYO K.K.)
      03-04-1984

      INTERNATIONAL SYMPOSIUM DIGEST AN-

TENNAS AND PROPAGATION, vol. 1, IEEE,
Houston, Texas, 1983, pages 187-190; K.H.
LINDENMEIER et al.: "Multipath reception in
FM car radio receivers and antenna diversity
by means of a distortion detector"

(73) Proprietor: TOYOTA JIDOSHA KABUSHIKI
KAISHA
1, Toyota-cho Toyota-shi
Aichi-ken 471(JP)

(72) Inventor: Ohe, Junzo
Daini-Ekaku Apt. 15303 2-56, Ekakushin-
machi
Toyota-shi Aichi(JP)
Inventor: Kondo, Hiroshi
6-49, Nitamata Onishi-cho
Okazaki-shi Aichi(JP)

(74) Representative: Wood, Anthony Charles et al
Urquhart-Dykes & Lord 91 Wimpole Street
London W1M 8AH(GB)

# Description

The present invention relates to vehicle antenna systems for detecting broadcast radio frequency signals.

Antenna systems are essential in vehicles for detecting broadcast wave signals such as radio and TV signals, as well as radio telephone signals, and for use with citizen band transceivers and other communication equipment likely to be increasingly provided in vehicles in the future.

In the prior art, a generally used and known antenna is a rod or pole type antenna which extends outwardly from the vehicle body and which provides a favourable reception performance in its own way. However, the rod antenna is an obstacle from the viewpoint of vehicle design.

Furthermore, the rod antenna is frequently bent or damaged, intentionally or carelessly, and tends to produce unpleasant noises when the vehicle is running at high speeds. It is therefore generally desired to eliminate the rod antenna from vehicles.

Recently, the number of frequency bands for broadcast or communication wave signals to be received by vehicles has increased. A plurality of antenna systems are required to receive signals in the respective frequency bands, and this will further damage the aesthetic appearance of the vehicle. Moreover, the plurality of antenna systems will suffer mutual electrical interference to reduce their reception performance.

Some efforts have been made to eliminate or conceal rod antennas. For example, an antenna wire is applied to the rear window glass of a vehicle.

Another proposal which has been made is to detect surface currents induced on the vehicle body by broadcast wave signals. This would appear to provide the most positive and efficient means for receiving broadcast wave signals, but experiments have shown that such a proposal was not as effective as was expected.

A first problem encountered is that the surface currents are not as strong as was expected. In the prior art, the surface currents utilized were primarily those flowing in the front portion of the roof of the vehicle body, but no sufficient signal level could be obtained.

A second problem is that the surface currents include a high percentage of electrical noise. Such noise is created mainly by the engine ignition system and the battery charging regulator system and thus cannot be eliminated while the engine is running. Therefore, clear reception of broadcast wave signals could not be achieved.

Under such disadvantageous conditions, some other proposals have been made. For example, Japanese Patent Publication 53-22418 discloses an antenna system utilizing currents which are induced on the body of a vehicle. The antenna system comprises an electric insulator provided on the vehicle body at a location where the currents flow concentratedly. The currents are detected directly by a sensor between the opposite ends of the insulator. That antenna system can detect practicable signals which are superior in S/N ratio. However, it requires a pick-up structure which must be disposed in a cut-out intentionally formed on a portion of the vehicle body. This cannot readily be applied to mass-produced vehicles.

Japanese Utility Model Publication 53-34826 discloses an antenna system comprising a pick-up coil for detecting currents on the pillar of the vehicle body. This is advantageous in that it can be housed completely within the vehicle body. However, it is not practical since the pick-up coil must be disposed near the pillar in a direction perpendicular to the length thereof. Moreover, such an arrangement cannot obtain any practicable antenna output and is believed to be only an idea.

As can be seen from the foregoing, the prior art does not provide a successful antenna system which detects surface currents induced on the vehicle body by broadcast wave signals and obtains a practicable S/N ratio. Rather, experiments suggested that an antenna system utilizing currents on the vehicle body was probably ineffective in principle.

Recently, TV sets are increasingly mounted in vehicles not only to receive TV wave signals but also to display various data relating to the vehicles. In such vehicle TV sets, TV wave signals are separated into video signals and audio signals. When the vehicle is at zero speed, both the video and audio signals are used in the TV set, but when the vehicle runs at speeds above a predetermined level, only the audio signals are obtained from the TV set.

Such vehicle TV sets have a problem in that the quality of the visual image can be reduced since reception conditions vary depending on the location and movement of the vehicle.

In order to overcome such a problem, a prior art vehicle TV set comprises a plurality of antennas coupled in a space diversity antenna system including a switch to select the optimum antenna depending on reception conditions. The diversity system is adapted to compare the video signal level with a reference level in synchronism with the vertical blanking interval of the video signals to permit selection of the optimum antenna.

The space diversity system also has a problem in that the construction and arrangement of a pick-up device required to efficiently detect currents induced by TV wave signals on the vehicle body and also to obtain a practicable S/N ratio has not properly been established. Particularly, a high frequency pick-up used as a TV antenna does not have a good high frequency directional pattern, and moreover FM wave signals in the VHF band are susceptible to the production of multi-path interference signals.

The prior art antenna systems were mainly intended to receive AM band waves meeting the needs of the times. This resulted in reduced reception performance since the wavelength of the broadcast wave signals is too long for the antenna systems. Accordingly the present invention is aimed at handling broadcast wave signals at a frequency above 50 MHz, i.e. in the FM band.

An object of the present invention is to provide an improved space diversity vehicle antenna system whereby surface currents induced on the vehicle body by broadcast radio frequency signals at a frequency above 50 MHz can be efficiently detected.

The documents "Patent Abstracts of Japan" at volume 7 no. 162 (JP-A-58-70642); volume 7 no. 162 (JP-A-58-70640); and volume 6 no. 37 (JP-A-56-156031) each describe a space diversity vehicle antenna system comprising:

first and second antenna means associated with the vehicle to detect broadcast radio frequency signals, at a frequency above 50 MHz, and to provide respective first and second output signals; and

switch means operable in response to a change in the level of a said output signal to select one of said output signals for use.

The present invention is characterized in that:

said first and second antenna means comprise first and second elongate pick-ups each mounted adjacent a metal structure forming a portion of the vehicle body to detect radio frequency surface currents induced in said metal structure by the broadcast radio frequency signals;

said first elongate pick-up being mounted to a said metal structure being a hinge for the trunk lid of the vehicle body, said first pick-up extending parallel to the length of the hinge; and

said second elongate pick-up being mounted to a said metal structure being a front marginal edge portion of the vehicle roof panel, said second pick-up extending parallel to said marginal edge portion.

EP-A-183443 is a document of the type mentioned in Article 54(3) of the EPC and describes a system as disclosed in the above-mentioned Patent Abstracts of Japan characterized in that:

said first and second antenna means comprise first and second spaced apart pick-ups each mounted adjacent a metal structure forming a portion of the automobile body to detect radio frequency surface currents induced in said metal structure by the broadcast radio frequency signal; and

said pick-ups each comprising a casing having an opening and a loop antenna disposed within said casing with a side thereof exposed through said opening to extend closely adjacent to a predetermined surface portion of said metal structure along which said surface currents have a concentrated flow.

In one embodiment described in EP-A-183443 the first pick-up is mounted in a front pillar of the automobile body and the second pick-up is mounted on a hinge for the trunk lid.

EP-A-183520 is also a document of the type mentioned in Article 54(3) of the EPC, and also describes a space diversity automobile antenna system utilizing similar said pick-ups. One pair of said pick-ups are disposed on the left side and a second pair are disposed on the right side of the automobile body. The two pick-ups of each said pair of pick-ups are mounted in association respectively with a front pillar and with a hinge bracket for the trunk lid on the pertinent side of the automobile body.

Documents EP-A-187446; EP-A-191233; EP-A-181120; and EP-A-206775 are also documents of the type mentioned in Article 54(3) of the EPC.

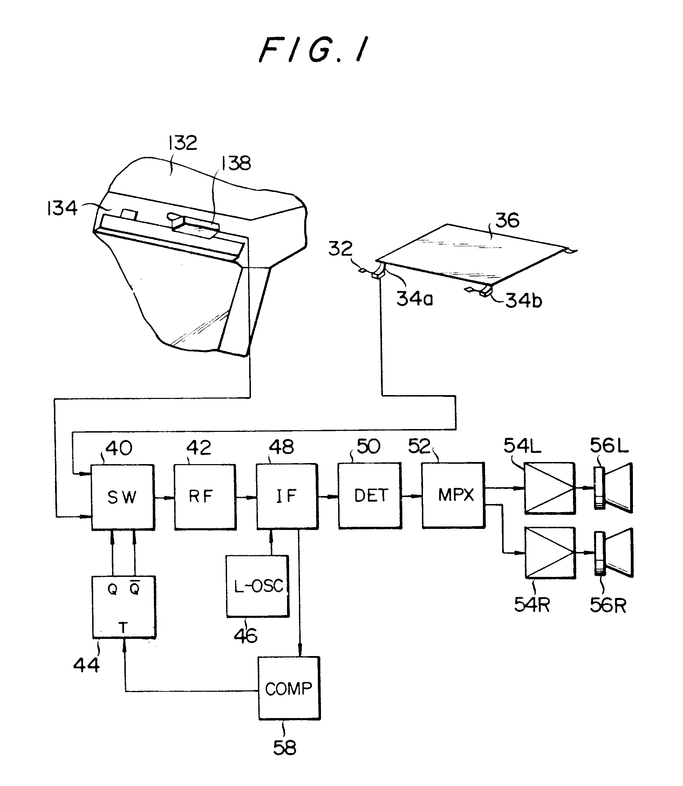

Attention is drawn to Figure 1 in EP-A-183443 in that its block circuit diagram portion is similar to the block circuit diagram portion of the present Figure 1.

Figures 1 to 3 in EP-A-187446 are similar to the present Figures 4 to 6.

Figures 1 to 3 in EP-A-181120 are similar to present figures 7 to 9

Figures 1 and 3 in EP-A-181120 somewhat resemble the present Figures 11 and 13.

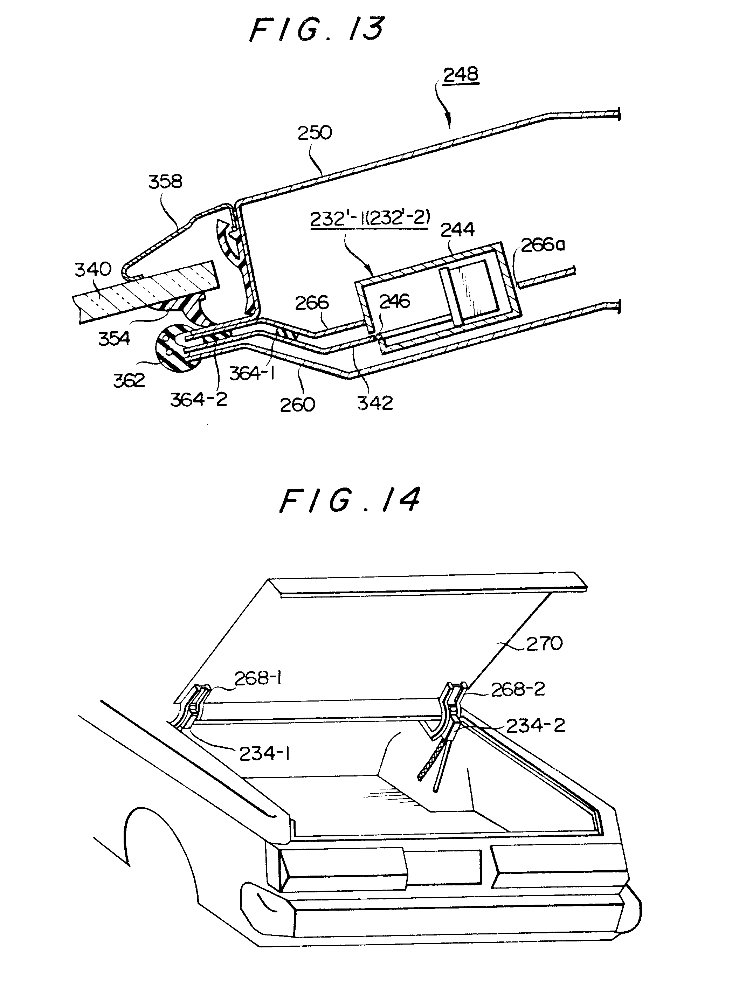

Figure 14 in EP-A-191233 is similar to the present Figure 14.

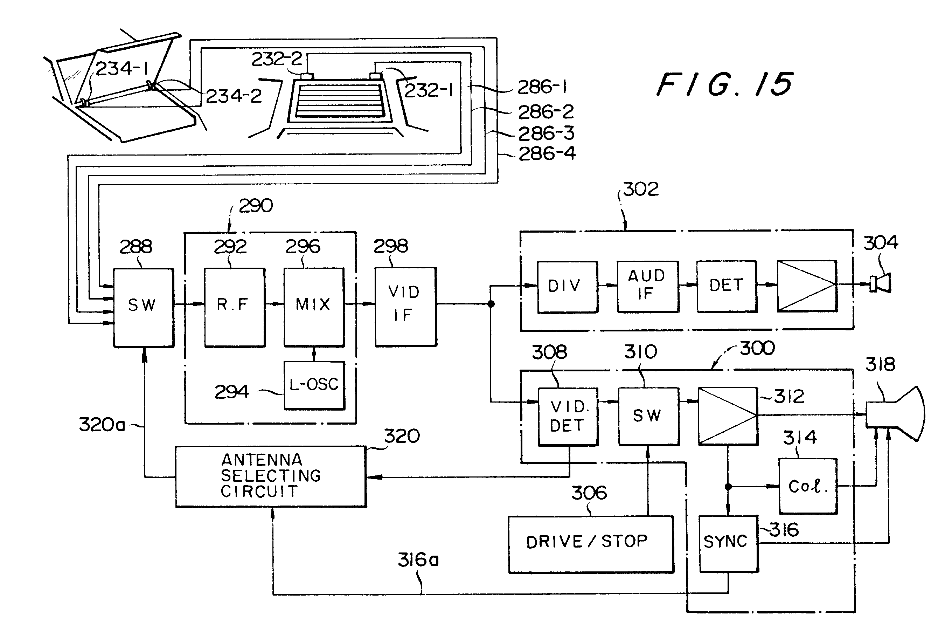

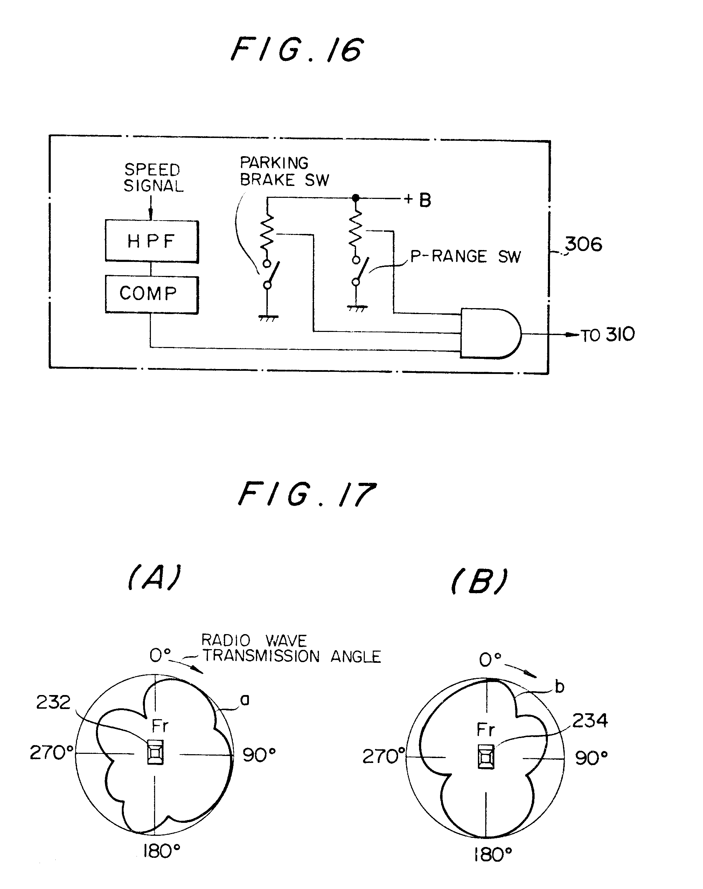

Figure 16 in EP-A-206775 has a block circuit diagram portion similar to the block circuit diagram portion of the present Figure 15.

Figure 1 illustrates a preferred embodiment of a vehicle antenna system constructed in accordance with the present invention.

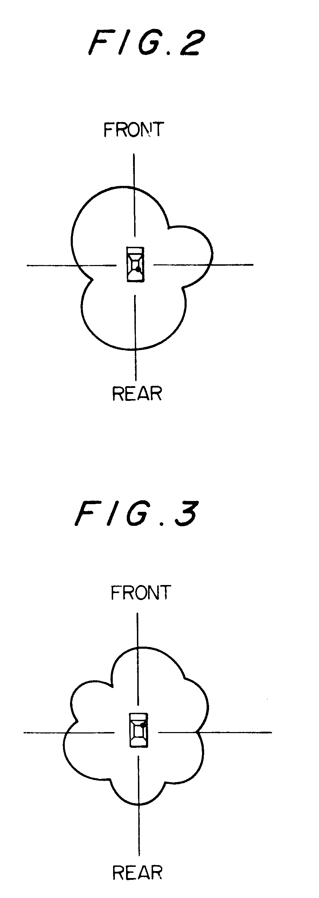

Figures 2 and 3 illustrate FM directional patterns of the pick-ups used in the antenna system shown in Figure 1.

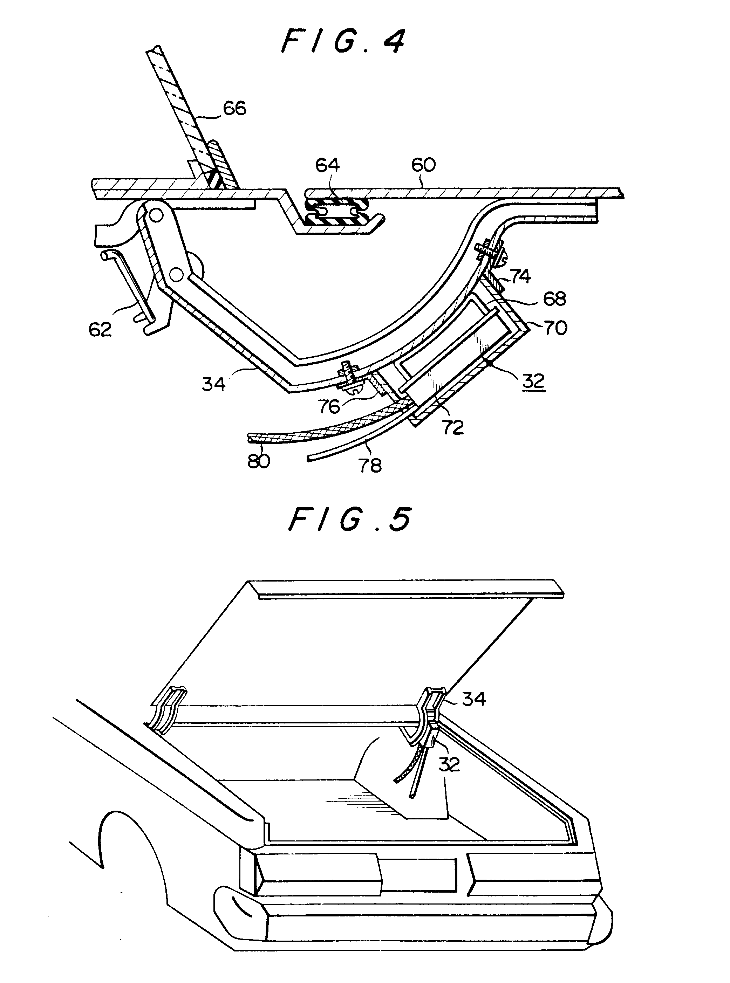

Figure 4 is a cross-sectional view showing an electromagnetic coupling type loop antenna used as a first pick-up which is mounted on a trunk hinge.

Figure 5 is a perspective view of the trunk hinge on which the pick-up of Figure 4 is mounted.

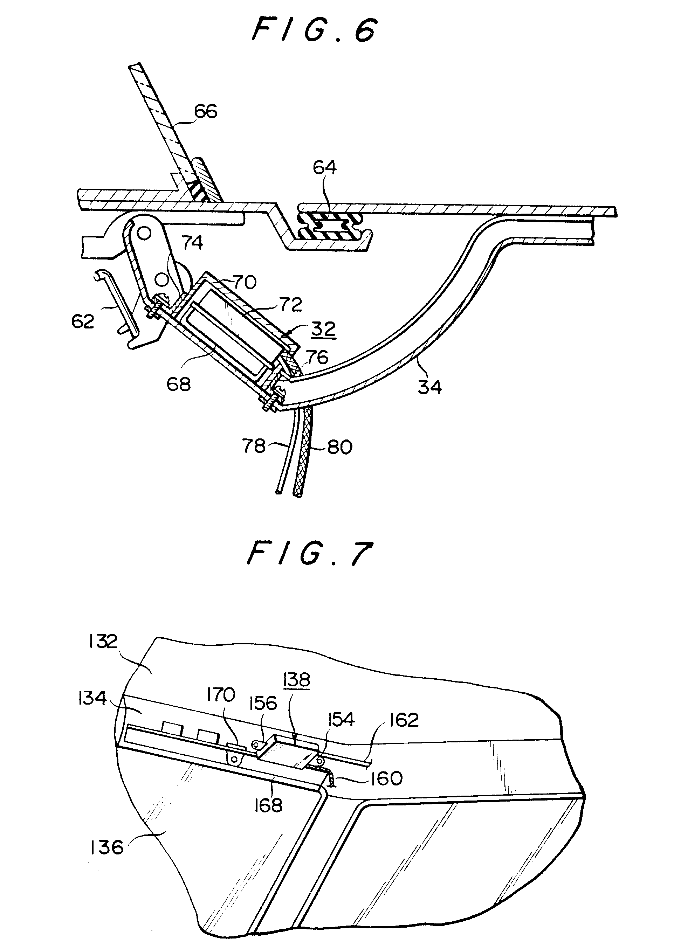

Figure 6 is a cross-sectional view showing the pick-up which is mounted on the trunk hinge in another manner.

Figure 7 is a perspective view showing an electromagnetic coupling type pick-up used as a second pick-up which is mounted on the front margin of a vehicle roof.

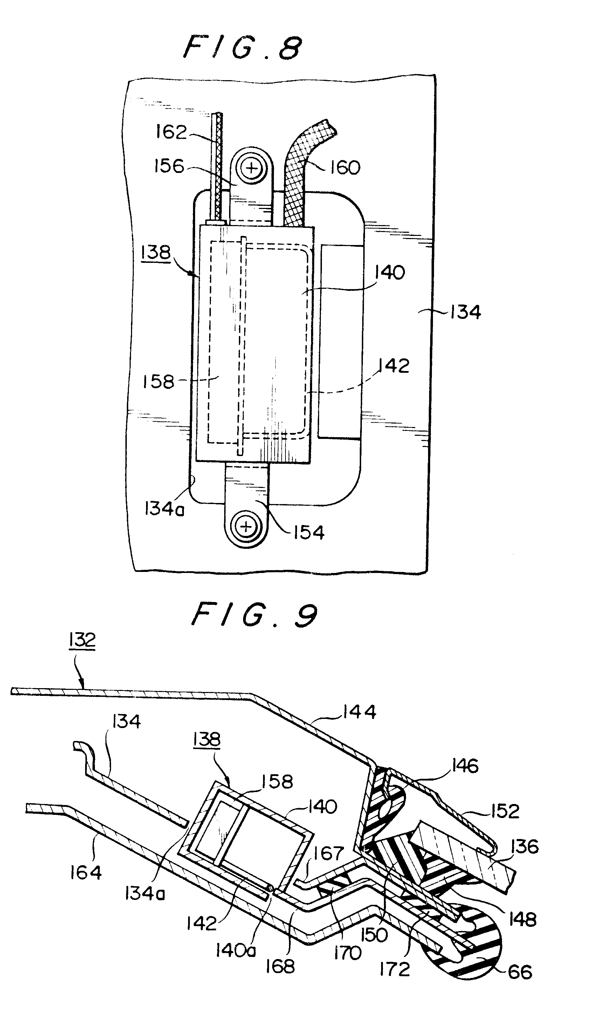

Figure 8 is a plan view of the pick-up shown in Figure 7.

Figure 9 is a cross-sectional view showing the details of the pick-up mounted on the vehicle roof as shown in Figures 6 and 7.

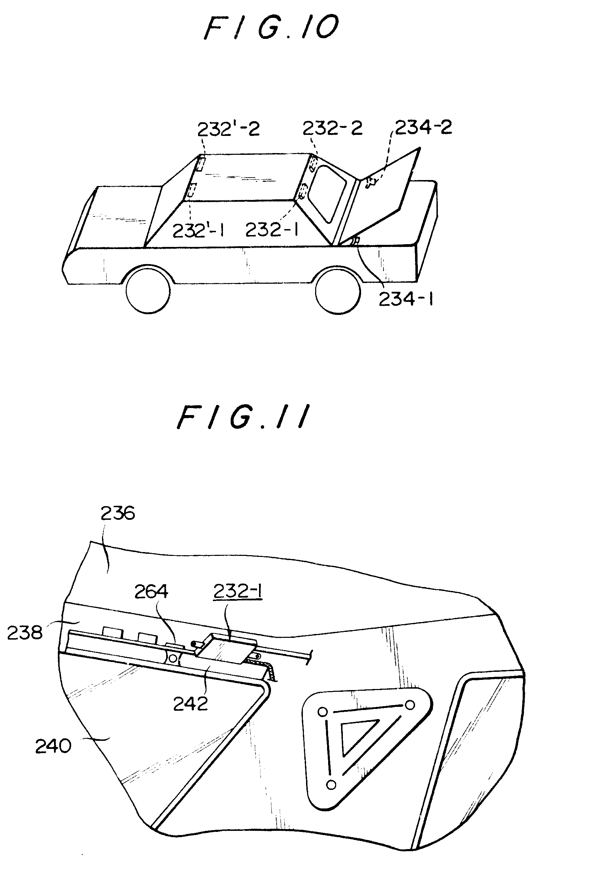

Figure 10 is a perspective view of the entire vehicle body, showing another arrangement of roof and trunk-hinge pick-ups mounted on the vehicle body.

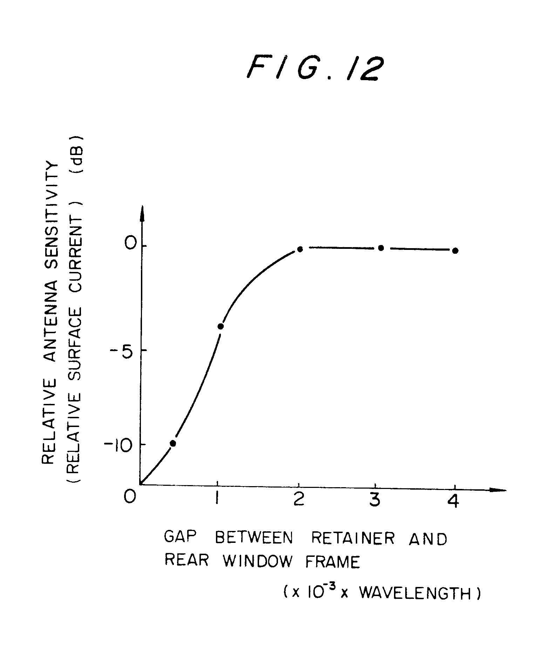

Figure 11 is a perspective view of a roof pick-up which is mounted on the roof panel near the rear window.

Figure 12 is a graph illustrating changes of the antenna sensitivity relative to the gap between the rear window frame and a molding retainer.

Figure 13 is a cross-sectional view of a pick-up which is mounted on the roof panel near the front window.

Figure 14 is a perspective view showing pick-ups which are mounted on two trunk hinges.

Figure 15 is a block circuit diagram of a diversity system according to the present invention.

Figure 16 is a diagram of the details of the drive state discriminating circuit shown in Figure 15.

Figures 17A and 17B illustrate directional patterns of the roof and trunk-hinge pick-ups in TV bands, respectively.

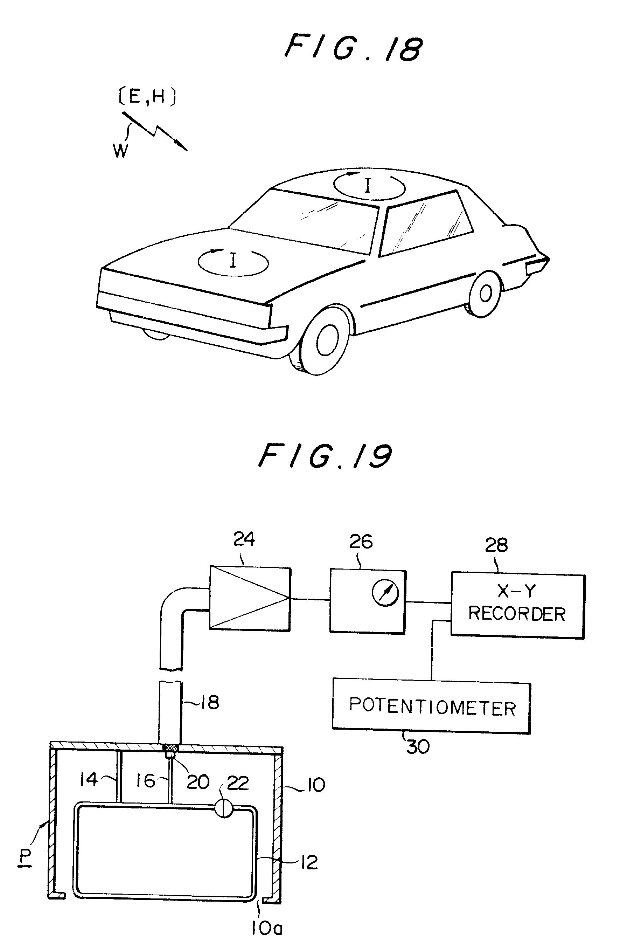

Figure 18 illustrates surface currents I induced on the vehicle body B by external waves W.

Figure 19 is a block diagram showing a probe and associated processing circuit for determining the distribution of surface currents on the vehicle body.

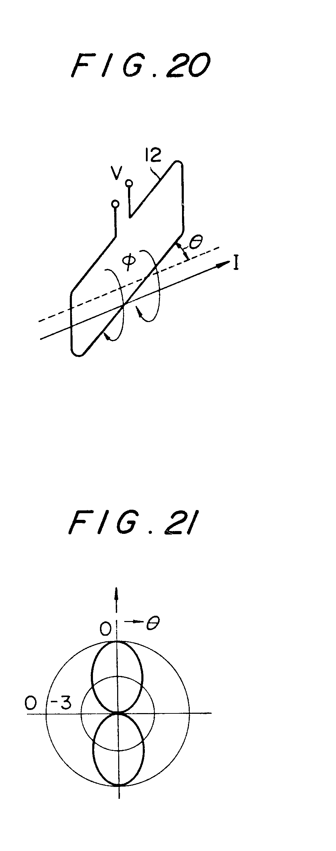

Figure 20 illustrates electromagnetic coupling between the surface currents I and the pick-up loop antenna.

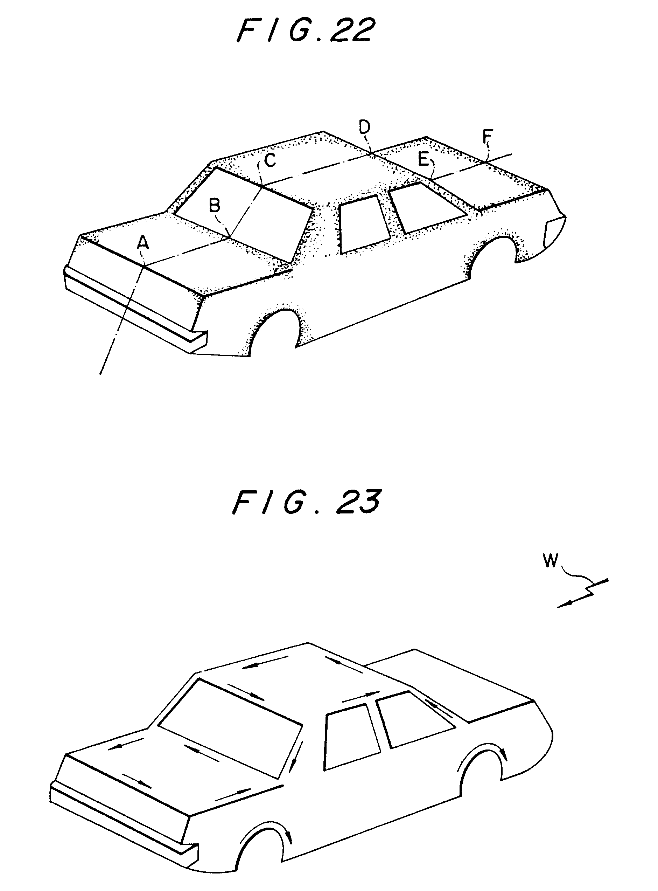

Figure 21 illustrates the directional pattern of the loop antenna shown in Figure 20.

Figure 22 illustrates the distribution of surface currents on the vehicle body.

Figure 23 illustrates the directions of the surface currents flowing on the vehicle body.

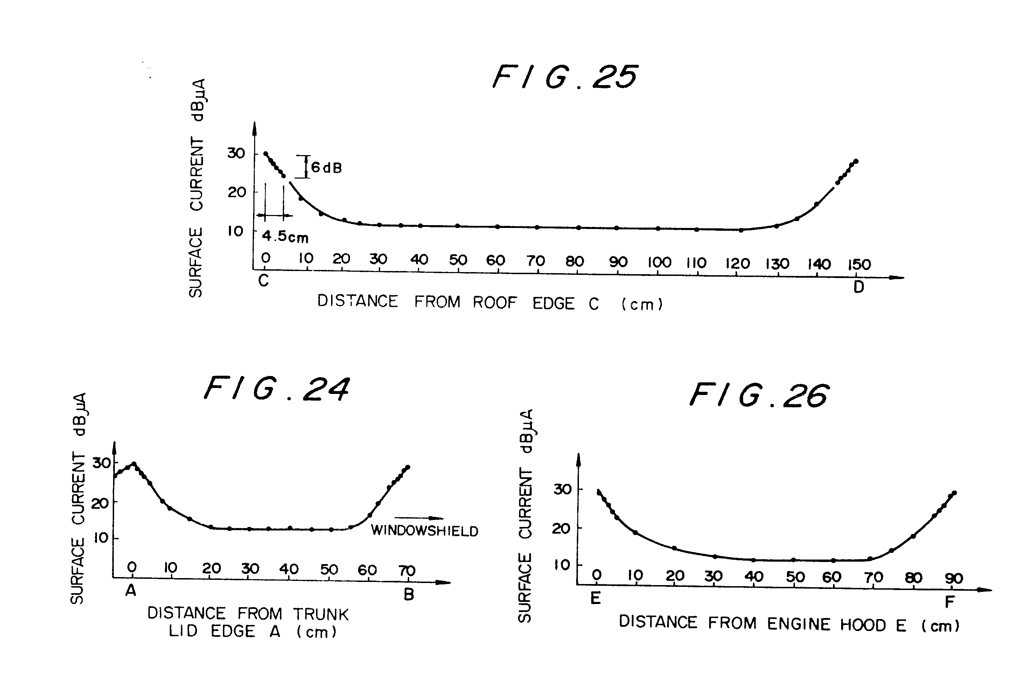

Figures 24, 25 and 26 are graphs showing the distributions of surface currents on the vehicle body along various sections shown in Figure 22.

Referring first to Figures 18-23, there is illustrated a process of measuring the distribution of high frequency currents and determining the most efficient locations at which the pick-ups of an antenna system can be mounted on the body of a vehicle.

Figure 18 shows the fact that when external waves W such as broadcast waves pass through the vehicle body of conductive metal material, surface currents I are induced on the vehicle body at various locations depending on the intensity of the external waves W.

The distribution of surface currents is determined by actually measuring intensities of currents on the vehicle body at various locations and by using computer simulation.

A probe is moved over the entire surface area of the vehicle body while changing its orientation at each location. Thus, the surface currents can be measured on the vehicle body over the surface area therof.

Referring to Figure 19, there is shown a probe P comprising a casing 10 of a conductive material for preventing the entry of external electromagnetic waves, and a loop coil 12 located within the casing 10. The casing 10 is provided with an opening 10a through which a portion of the loop coil 12 is exposed externally. The exposed portion of the loop coil 12 is positioned close to the surface of the vehicle body B such that a magnetic flux induced by the surface currents on the vehicle body can be detected by the loop coil 12. The loop coil 12 is electrically connected to the casing 10 by a short-circuiting line 14. The loop coil 12 includes a capacitor 22 which functions to resonate the frequency of the loop coil 12 at a frequency to be measured for an improved pick-up efficiency.

When the probe P is moved along the surface of the vehicle body B and angularly rotated at each point of measurement, the distribution and orientation of the surface currents can be determined. Referring again to Figure 19, the output of the probe P is amplified by a high frequency voltage amplifier 24 the output voltage of which in turn is displayed at a high frequency voltage meter 26 and at the same time recorded by an XY recorder 28 as a surface current value on the vehicle body at the respective location. The XY recorder 28 also receives a signal indicative of the corresponding location on the vehicle body from a potentiometer 30. Thus, the distribution of surface currents on the vehicle body can be determined at the XY recorder 28.

Figure 20 shows a declination $\theta$ between the surface high frequency currents I and the loop coil 12 of the probe P. As shown, a magnetic flux $\phi$ induced by the surface currents I intersects the loop coil 12 to produce a voltage V to be detected. As can be seen from Figure 21, the maximum voltage is provided when the declination $\theta$ is equal to zero, that is, when the surface currents I are parallel to the loop coil 12 of the probe. When the maximum voltage is obtained by rotating the probe P at each point of measurement, the orientation of the surface currents I can be known at that point of measurement.

Figures 22 and 23 show the magnitude and orientation of the surface high frequency currents produced on the vehicle body at the respective locations by external waves having a frequency equal to 80 MHz, the magnitude and orientation of the surface currents being determined from the actual operation of the probe P and by the use of a simulation by computer. As seen from Figure 22, the magnitude of the surface currrents becomes maximum at the marginal portions of the flat panels of the vehicle body and minimum at the central portions of these flat panels.

As seen from Figure 23, it is further understood that the surface currents are concentratedly induced in the direction parallel to each of the marginal edges of the vehicle body or along the connection between adjacent flat panels.

By further study of distribution of the surface currents induced on the vehicle body along the longitudinal axis shown by the dotted line in Figure 22, there are found such sectional distributions as are shown in Figures 24-26.

Figure 24 shows a sectional distribution of surface currents along a longitudinal section A - B on the trunk lid. As seen from this graph, the surface currents are maximum at the opposite ends. It is therefore understood that if a pick-up is disposed at a portion of the margin of the trunk lid, for example at one of the trunk hinges, the concentrated current flow can effectively be detected.

Figure 25 shows a sectional distribution of surface currents along the front roof of the vehicle body and Figure 26 shows a sectional distribution of surface currents along the engine hood of the vehicle body. It is similarly understood that the magnitude of the surface currents becomes maximum at the opposite ends of the front roof or engine hood.

It is thus apparent that good sensitivity can be provided if the pick-up is disposed on the vehicle body near one of the respective margins thereof.

Where the pick-up is located near a marginal edge of the vehicle body, for example, such that the length of the loop antenna extends parallel to the length of the marginal edge, it is preferred that the pick-up is spaced apart from the marginal edge within a range depending on the carrier frequency of broadcast waves to be received to provide a practicable sensitivity.

As described hereinbefore, the sectional distributions of surface currents shown in Figures 24-26 are for FM broadcast waves having a frequency equal to 80 MHz. The magnitude of the surface currents decreases as the distance from the marginal edge of the vehicle body is increased. Considering a lower limit of 6 dB or less at which a good sensitivity can actually be provided, it is understood from Figures 24-26 that if the distance from the marginal vehicle edge is within 4.5 cm, good sensitivity can be obtained.

Therefore, the antenna system will have a sufficient performance for a carrier frequency of 80 MHz in practice if its pick-up is disposed on the vehicle body at a position spaced apart from the marginal edge thereof within a 4.5 cm.

From results of the computer simulation and experiments, it is recognized that such a range of distance depends on the level of the carrier frequency in an inverse proportional relation therebetween.

Thus, good reception can be obtained for each of various carrier frequencies if the distance of a pick-up from the marginal edge of a metallic panel on the vehicle body is within

$$12 \times 10^{-3} \ c/f \ (m)$$

where c is the velocity of light and f is the carrier frequency.

For a carrier frequency equal to 100 MHz, the pick-up is preferably disposed spaced from the marginal edge of the vehicle body within 3.6 cm. As the carrier frequency f increases, the pick-up should be disposed on the vehicle body at a location closer to the marginal edge thereof.

Where pick-ups are respectively located near the marginal portions of the vehicle body to receive broadcast waves as described hereinbefore, the pick-ups will have directional antenna patterns different from one another.

Referring now to Figure 1, there is shown a preferred embodiment of an antenna system according to the present invention, and comprising a first pick-up 32 disposed on the vehicle body at a right-hand trunk hinge 34a along the length thereof and a second pick-up 138 disposed on the vehicle body near the right-hand marginal edge of the front roof 132 along the length thereof.

Figure 2 shows the FM directional pattern of the first pick-up 32 mounted on the right-hand trunk hinge 34a. It is apparent from this figure that the first pick-up 32 has notches at the rightward and forward position and at the lateral position.

Figure 3 shows the FM directional pattern of the second pick-up 138 disposed near the right-hand marginal edge of the front roof 132. It is apparent from this figure that the second pick-up 138 has a high sensitivity for the notch directions of the first pick-up 32.

Thus, by combining the first and second pick-ups 32 and 138 with a space diversity receiving system, the first and second pick-ups can complement each other with respect to their directional patterns to provide good reception of FM waves.

The first and second pick-ups 32 and 138 are spaced apart from each other by a distance equal to about 2 meters in the longitudinal direction of the vehicle body. This is very effective in a space diversity for FM bands since the wavelength of FM waves is equal to about 4 meters.

Although the embodiment shown in Figure 1 has been described as to the right-hand portion of the vehicle body on which the first and second pick-ups 32 and 138 are mounted, these pick-ups may similarly be mounted on the left-hand trunk hinge and the left-hand roof portion of the vehicle body, respectively. In such a case, the first and second pick-ups 32 and 138 will have directional patterns reversed from those of Figures 2 and 3 in the right-to-left direction. However, the first and second pick-ups 32 and 138 will similarly complement each other with respect to their direction patterns to provide an improved space diversity receiving antenna system.

With reference to Figure 1, there will now be described a circuit for automatically selecting one of the first and second pick-ups 32 and 138 which can more sensitively receive broadcast waves.

The outputs of the first and second pick-ups 32 and 138 are connected to a high frequency amplifying circuit 42 through coaxial cables via a switch circuit 40. The switch circuit 40 is actuated by the output of a T-type flip flop 44 to selectively connect one of the pick-ups 32 or 138 with the high frequency amplifying circuit 42. The output of the amplifying circuit 42 is supplied to a detection circuit 50 through an intermediate frequency amplifying circuit 48 which is connected to a local oscillator 46. At the detection circuit 50, only audio signals are taken out from the output signals of the high frequency amplifying circuit 42.

The audio signals are then separated into right-hand output signals and left-hand output signals by a stereo decoder 52. The right- and left-hand output signals are reproduced at right- and left-hand speakers 56R and 56L through right- and left-hand amplifiers 54R and 54L, respectively.

The output signals from the intermediate frequency amplifier 48 are compared with a threshold set in a comparator 58. If the output level of the amplifier 48 is lower than the threshold to indicate that the sensitivity in either the pick-up 32 or 138 decreases below a predetermined level, the comparator 58 generates a trigger output used to invert the output of the T-type flip flop 44.

When the output of the flip flop 44 is inverted, the switch circuit 40 switches to select one of the pick-ups 32 or 138 which can more sensitively receive broadcast waves.

In such a manner, a space diversity receiving antenna system comprises the first pick-up 32 on the trunk hinge 34a of the vehicle body and the second pick-up 138 on the marginal portion of the front roof, the first and second pick-ups complementing each other with respect to their directional patterns to always provide the automatically selected antenna having a good sensitivity.

Figures 4-6 illustrate the details of the first pick-up 32 mounted on the trunk hinge 34. Generally, surface currents are concentratedly induced on the trunk hinges by broadcast waves having a frequency belonging to FM bands with a density equal to or higher than those of other vehicle parts. This density is increased as the level of the frequency increases. Accordingly, surface currents can unexpectedly be detected from the trunk hinges which was not recognized to have surface currents sufficient to be detected for broadcast waves belonging to AM bands. The trunk hinges are advantageous in that since they are remote from the engine, they are unlikely to be adversely affected by noises from the vehicle body. Therefore, the surface currents detected at the trunk hinges have a superior S/N ratio.

The pick-up 32 is in the form of an electromagnetic coupling type pick-up which has a construction similar to the aforementioned probe, described in relation to Fig. 19, including the loop coil for determining the distribution of surface currents on the vehicle body.

The trunk hinge 34 is pivotally mounted at one end on the vehicle body with the other end thereof rigidly mounted on a trunk lid 60 to provide a pivot point for the trunk lid 60. The end of the trunk hinge 34 mounted on the vehicle body is provided with a torsion bar 62 which functions to position and hold the trunk lid 60 at its open state. As well-known in the art, a water-tight weather strip 64 is located between the trunk lid 60 and the vehicle body to prevent external water from entering the interior of the trunk at the margin of a rear window glass 66.

In the illustrated embodiment, the first pick-up 32 is mounted on the outer or trunk-room side of the trunk hinge 34 and extends along the length of that trunk hinge. The first pick-up 32 includes a loop antenna 68 mounted therein and which is located with its length extending along the length of the trunk hinge 34. As described hereinbefore, the loop antenna 68 can efficiently acquire the surface currents flowing on the trunk hinge 34.

The first pick-up 32 further comprises a casing 70 of a conductive material within which the loop antenna 68 and circuitry including a pre-amplifier and other elements are mounted. The casing 70 is provided with an opening facing the trunk hinge 34. The opening side of the casing 70 includes L-shaped fittings 74 and 76 rigidly connected therewith at the opposite ends. Each of the fittings 74 and 76 is rigidly mounted on the trunk hinge 34 by suitable screws. Thus, only a magnetic flux induced by the surface high frequency currents flowing on the trunk hinge 34 will be acquired by the loop antenna 68 without any entry of other external electromagnetic fluxes into the interior of the casing 70.

Said loop antenna 68 extends along the length of the trunk hinge 34 and may preferably be curved to the curvature of the trunk hinge 34.

The circuitry 72 is connected to a power supply and receives control signals through a cable 78. High frequency signals detected by the loop antenna 68 are fed out through a coaxial cable 80 and then processed by a circuit similar to that used in the aforementioned probe for determining the distribution of surface currents.

The loop antenna 68 is in the form of a single electrically insulated winding which is arranged in intimate contact with the trunk hinge 34. Thus, the loop antenna 68 can intersect the magnetic flux induced by the surface currents on the trunk hinge 34.

In such a manner, there is provided a very advantageous vehicle antenna system which can effectively receive broadcast waves belonging to high frequency bands without external exposure.

Figure 6 shows another way of mounting the first pick-up 32 on the trunk hinge 34. This is substantially the same way as that of Figure 4 except that the pick-up is mounted on the inner side of the trunk hinge 34. The first pick-up 32 is similarly of an electromagnetic coupling type and includes a casing 70 within which a loop antenna 68 and associated circuitry 72 are mounted. The casing 70 is similarly rigidly mounted on the trunk hinge 34 through L-shaped fittings 74 and 76 by any suitable screw means.

In such an arrangement, the first pick-up 32 will not contact baggage and other items housed in the trunk room since the pick-up 32 is mounted on the side of the trunk hinge 34 opposite to the trunk room.

Referring next to Figures 7-9, there is shown a second pick-up 138 disposed near the margin of the front portion of the vehicle roof. Figure 7 shows the front portion of the roof 132 of a metallic material in its uncovered state, which roof includes a front window frame 134 supporting a front window glass 136 and defining a marginal edge portion of the front roof 132.

Figure 8 shows the details of the second pick-up 138 which includes a metallic casing 140 for shielding the interior from any external flux and a loop antenna 142 mounted therewithin, with these components defining an electromagnetic coupling type pick-up similar to the aforementioned probe (Fig. 19) used to determine the distribution of surface currents on the vehicle body.

Figure 9 is a cross-sectional view of the second pick-up 138 mounted on the front portion of the roof 132 which includes a roof panel 144. The front window frame 134 is joined to the roof panel 144 at one edge. The roof panel 144 also supports the front window glass 136 through a fastener 146 and a seal 148. The fastener and seal 146, 148 are air-tightly joined together by an adhesive 150. A molding 152 is rigidly mounted between the roof panel 144 and the front window glass 136.

A roof trim 164 is rigidly mounted on the roof panel 144 inwardly of the front window frame 134 of the front portion of the roof 132 (passenger room side). The roof trim 164 is connected at one edge with the corresponding edge of the front window frame 134 by an edge molding 166.

An edge molding support 168 is disposed between the front window frame 134 and the roof garnish 164 to support the edge molding 166. The support 168 is spaced from the front window frame 134 by means of spacers 170 and 172.

The loop antenna 142 of the second pick-up 138 is diposed facing the marginal portion of the support 168. To this end, the front window frame 134 is provided with an opening 134a in which the casing 140 of the pick-up 138 is located.

In such a manner, the second pick-up 138 will have its loop antenna 142 disposed near the marginal portion of the support 168 and extending along the length thereof.

The length of the support 168 is selected to be equal to about a half-wavelength of the broadcast waves belonging to FM bands.

As seen from Figure 9, the casing 140 of the pick-up 138 is provided with an opening 140a in which one longitudinal side of the loop antenna 142 is positioned to face the marginal portion of the support 168 through the opening 140a.

Within the interior of the casing 140, the loop antenna 142 can effectively acquire the magnetic flux induced by the surface currents flowing on the marginal portion of the support 168. Any other external flux is blocked by the metallic casing 140. Thus, the second pick-up 138 can more sensitively detect the surface currents induced on the vehicle body by the broadcast waves.

The casing 140 includes L-shaped brackets 154 and 156 formed thereon at the opposite ends such that the pick-up 138 can be positioned relative to the retainer 168, as shown in Figure 8. The brackets 154 and 156 are rigidly secured to the front window frame 134 by any suitable fastening means such as screws.

The casing 146 of the pick-up 138 contains circuitry 158 connected to the loop antenna 142 and which includes a pre-amplifier and other elements for processing detected signals. High frequency signals detected by the loop antenna 142 are fed out through a coaxial cable 160 and then processed by a circuit similar to that used in she aforementioned probe for measuring the distribution of surface currents. The circuitry 158 is connected to a power supply and receives control signals through a cable 162.

The loop antenna 142 is in the form of a single electrically winding which is arranged in intimate contact with the retainer 168. As a result, the loop antenna 142 can more sensitively acquire a magnetic flux induced by the surface currents on the support 168.

In the present embodiment, the exposed side of the loop antenna 142 through the opening of the casing 140 is spaced apart from the edge of the support 168 within a distance of 4.5 cm. Thus, the loop antenna 142 can detect broadcast waves belonging to radio frequency bands (particularly, 50 MHz - 300 MHz) from the surface currents flowing on the marginal portion of the support 168. As seen from Figure 23, the orientation of the flowing surface currents is along the marginal portions of the vehicle body. Therefore, the loop antenna 146 is located so that the length thereof extends along the marginal edge of the support 168.

Although the embodiments of the present invention have been described as utilizing electromagnetic coupling type pick-ups the present invention may similarly be applied with capacitive coupling type pick-ups as long as they can acquire external waves through the detection of surface currents on the trunk hinges and the front marginal portion of the roof.

When capacitive coupling type pick-ups are used, detecting electrodes are disposed on and along the corresponding trunk hinge and front roof margin through air gaps or insulating sheets to form electrostatic capacitances therebetween, respectively. Surface currents will be fed out by the detecting electrodes and then converted into audio/video signals in any suitable manner.

Referring to Figure 10, there is shown the arrangement of a space diversity antenna system comprising two pick-ups 232-1 and 232-2 mounted on the rearward edge of the roof of the vehicle body (not in accordance with the invention) and two pick-ups 234-1 and 234-2 mounted on the trunk hinges of the vehicle body. The roof pick-ups may be disposed on the forward edge of the vehicle roof as shown by 232'-1 and 232'-2 in Figure 10, in accordance with the invention.

Figure 11 shows the roof pick-up 232-1 mounted on the vehicle roof along the edge of the rear window. The roof panel 236 is shown in its uncovered state and as supporting a rear window glass 240 through a rear window frame 238.

The roof pick-ups 232-1 and 232-2 are disposed on the vehicle roof at the opposite ends of an edge molding support 242, respectively. These pick-ups 232 are mounted on the vehicle roof in the same manner as shown in Figure 9.

As in the previously described embodiments, the support 242 is disposed between the rear window frame 238 and a roof trim (not shown) to support an edge molding (not shown). The support 242 is spaced from the rear window frame 238 by spacers (not shown) such that the surface currents can be induced in a concentrated flow on the support 242.

A variable antenna sensitivity depending on the spacing between the rear window frame 238 and the support 242 is shown as a variable density of surface current in Figure 12. From this graph, it will be apparent that the antenna sensitivity becomes maximum at a spacing equal to about $2 \times 10^{-3} \times$ wavelength. Thus, the surface currents can be induced in a concentrated flow on the marginal portion of the vehicle body if the support 242 is disposed spaced apart from the rear window frame 238 by such a spacing.

In such a manner, the roof pick-up 232 can efficiently detect the surface currents induced on the vehicle body. Since the support is spaced apart from the rear window frame by the spacing of about $2 \times 10^{-3} \times$ wavelength and the length of the support is selected to be about a half-wavelength for TV waves belonging to the bands of 90 MHz - 108 MHz, to be about one wavelength for waves belonging to the band of 170 MHz - 222 MHz and to be about two to four wavelengths for UHF bands, the surface currents will be induced in a concentrated flow so that the broadcast waves belonging to the above bands can more sensitively be received.

The roof pick-ups 232 may be disposed on the vehicle roof near the front window. Figure 13 shows pick-ups 232'-1 and 232'-2 mounted on the front roof panel 248 near the front window. These roof pick-ups 232' are located within a service hole 266a formed in an inner header panel 266 adjacent to the marginal edge of the front window.

The roof panel 248 includes a roof panel section 250 on which a front window glass 340 is mounted through a seal 354. A molding 358 is disposed between the roof panel section 250 and the front window glass 340. As with the pick-ups 232 adjacent to the rear window, an edge molding support 342 is arranged between the inner header panel 266 and a roof trim 260 to support an edge molding 362.

The support 342 is spaced from the inner header panel 266 by spacers 364-1 and 364-2 such that the surface currents will be induced in a concentrated flow on the support 342.

A magnetic flux induced by the surface currents flowing on the marginal portion of the inner header panel 266 can be acquired by a loop antenna 264 of the pick-up 232' including a casing 244 within which the loop antenna 246 is mounted as described hereinbefore and which can shield the antenna from any external flux of electromagnetic waves.

In the embodiment of Figure 13, the loop antenna 246 of each of the pick-ups 232' is partially exposed through the casing 244 with the exposed antenna portion being spaced apart from the marginal portion of the support 342 within a distance of 4.5 cm. The loop antenna 246 can efficiently detect the surface currents induced on the marginal portion of the support 342 by broadcast waves having a frequency belonging to the FM or TV bands. As seen from Figure 23, the orientation of the induced surface currents is along the marginal portion of the support. Therefore, the loop antenna 246 is arranged with the length thereof extending along the edge of the support 342.

In order to complement the directional pattern of the roof pick-ups 232, other pick-ups are arranged on the trunk hinges. Surface currents having a density equal to or higher than those flowing on the other vehicle portions are induced on the trunk hinges. Such a tendency is increased for broadcast waves having higher frequencies. Thus, the surface currents can be detected from the trunk hinges which was not expected for AM bands.

Since the trunk hinges are remote from the engine, surface currents detected therefrom have less noise and are at a level having a superior S/N ratio.

Figure 14 shows the above pick-ups mounted on the trunk hinges of the vehicle body with the details thereof already shown in Figure 4. Each of the trunk hinge pick-ups 234 is shown as being of an electromagnetic coupling type which includes a loop antenna for detecting the surface currents induced on the corresponding trunk hinge as in the roof pick-ups 232. The construciton of these trunk hinges is similar to those of the trunk hinge previously described. Similarly, each trunk hinge pick-ups may be mounted on the corresponding trunk hinge at the inner side thereof rather than the outer side. As a result, the pick-ups will not contact baggage or other items housed in the trunk space.

In such a manner, there is provided a vehicle antenna system which comprises a combination of the front roof pick-ups 232' with the trunk hinge pick-ups 234 such that the directional patterns of the front roof and hinge pick-ups complement each other to provide an improved directional pattern.

Referring now to Figure 15, there is shown a switching circuit 288 which is adapted to receive the respective signals from the roof pick-ups 232-1 and 232-2 and from the trunk hinge pick-ups 234-1 and 234-2 through coaxial cables 286-1 - 286-4, respectively.

In the embodiment of Figure 15, each of the pick-ups 232 and 234 is adapted to receive TV waves and is selected by the action of the switching circuit 288. The switching circuit 288 is actuated to select signals from one of the pick-ups and to supply them to a tuner 290.

The tuner 290 comprises a well-known circuit including a high frequency amplifier 292, a local oscillator 294 and a mixer 296. Signals selected by the tuner 290 are then amplified by an intermediate frequency video amplifier 298 with the amplified signals being supplied to a video display circuit 300 and an audio output circuit 302, respectively. The output of the audio output circuit 302 is coupled to a speaker 304.

The video display circuit 300 comprises a drive state discriminating circuit 306 for judging whether a vehicle is in its stop or drive state, and a switch 310 located between a video detection circuit 308 and a video amplifier 312 to selectively block the communication therebetween. When the drive state discriminating circuit 306 senses the stop state of the vehicle, the switch 310 is turned on. In the drive state of the vehicle, the switch 310 is turned off.

As shown in Figure 16, the drive state discriminating circuit 306 is adapted to judge the stop state of the vehicle when a parking position switch and a parking brake are placed on their ON positions and if the velocity of the vehicle is lower than a predetermined reference level. The drive state discriminating circuit 306 also comprises an AND gate generating high-level output signals which in turn are used to actuate the switch 310. Under the conditions other than the above conditions, the discriminating circuit 306 judges the vehicle to be in its running state and then causes the AND gate to generate low-level output signals which in turn are used to shift the switch 310 to its OFF state. The drive state discriminating circuit 306 further comprises a high pass filter and a comparator. Pulses indicative of the vehicle velocity are supplied to the comparator through the high pass filter wherein the pulses are compared with a reference level to judge the velocity of the vehicle.

When the switch 310 is in its ON state under the stop state of the vehicle, images are displayed on a CRT tube 318 and audio signals are reproduced by the speaker 304. When the switch 310 is in its OFF state under the vehicle stop state, no image is displayed on the CRT tube 318 and only audio signals are produced by the speaker 304.

In order that excellent images and audio signals can always be obtained following a variable reception of TV waves even when the vehicle is running, a diversity receiving system is provided for selecting one of the pick-ups 232 and 234 depending on the variable reception of TV waves.

If the output of the video detection circuit 308 becomes lower than a preselected level, an antenna switching circuit 320 then generates a switching output signal 320a which in turn is supplied to the switching circuit 288 which in turn selects one of the pick-ups having the greatest sensitivity at that time. Such selection may be carried out by utilizing audio detection output signals.

The timing of the antenna switching may be in synchronism with a vertical synchronizing signal such that the pick-ups will be switched from one to another during a flyback time of scanning lines. The circuitry of Figure 15 further comprises a chromaticity circuit 314 and a synchronizing and deflecting circuit 316.

In such a manner, the antenna system can select a pick-up having an optimum sensitivity such that the optimum reception of TV waves can always be made by the antenna system. The antenna system can further be improved by providing pick-ups respectively mounted on the front roof and trunk hinge of the vehicle body such that their directional patterns complement each other.

Figure 17A shows the directional pattern of a roof pick-up mounted on the vehicle roof adjacent to the rear window frame while Figure 17B shows the directional pattern of a pick-up mounted on one of the trunk hinges of the vehicle.

As will be apparent from Figures 17A and 17B, the characteristic curve a of the roof pick-up 232 indicates the fact that the sensitivity is increased in a direction across the vehicle body. On the contrary, the characteristic curve b of the trunk hinge pick-up shows that the sensitivity is increased in a direction along the longitudinal axis of the vehicle body. It is thus understood that the pick-ups can complement each other in sensitivity by effecting the diversity reception based on these pick-ups. As a result, the reception of TV waves can be improved.

There has been described a diversity receiving antenna system consisting of pick-ups which are respectively mounted on the front roof and trunk hinges of the vehicle and thus have different directional patterns. Such a diversity receiving antenna system can receive broadcast waves with improved directional patterns and with less multi-path noise. In addition, the diversity receiving antenna system desirably includes no outwardly extending antenna since it is adapted to receive broadcast waves from surface currents induced on the vehicle body by the broadcast waves.

**Claims**

1.  A space diversity vehicle antenna system comprising:

    first and second antenna means (32,138) associated with the vehicle to detect broadcast radio frequency signals, at a frequency above 50 MHz, and to provide respective first and second output signals;

    switch means (40,288) operable in response to a change in the level of a said output signal to select one of said output signals for use;

    characterized in that:

    said first and second antenna means comprise first and second elongate pick-ups (32,138) each mounted adjacent a metal structure forming a portion of the vehicle body to detect radio frequency surface currents induced in said metal structure by the broadcast radio frequency signals;

    said first elongate pick-up (32,234) being mounted to a said metal structure being a hinge (34) for the trunk lid (60) of the vehicle body, said first pick-up extending parallel to the length of the hinge; and

    said second elongate pick-up (138,232') being mounted to a said metal structure being a front marginal edge portion (134) of the vehicle roof panel (132), said second pick-up extending parallel to said marginal edge portion.

2.  An antenna system according to claim 1 characterized in that said first and second pick-ups (32,138) are disposed on the same side of the vehicle body.

3.  An antenna system according to claim 1 or claim 2 characterized in that said first pick-up (32) comprises a casing (70) having an opening and an elongate loop antenna (68) disposed within said casing with a longer side thereof exposed through said opening to extend adjacent and parallel to the length of said hinge (34).

4. An antenna system according to claim 1 or claim 2 characterized in that said first pick-up comprises a detection electrode extending adjacent and parallel to the length of said hinge to achieve a capacitive coupling with said hinge.

5. An antenna system according to any one of claims 1 to 4 characterized in that said second pick-up (138) comprises a casing (140) having an opening and an elongate loop antenna (142) disposed within said casing with a longer side thereof exposed through said opening to extend adjacent and parallel to the length of said portion (134).

6. An antenna system according to any one of claims 1 to 5 characterized in that said front marginal edge portion (144) of the roof panel (132) is secured to a front window frame (134) and the secured edges are covered by an edge molding (166) supported by an elongate edge molding support (168), said second pick-up (138) extending adjacent and parallel to an edge of said elongate edge molding support (168), and said support having a length substantially equal to one half of the wavelength of a radio frequency signal to be received.

7. An antenna system according to claim 6 characterized in that said second pick-up (138) is spaced apart from said edge of said elongate edge molding support (168) by a distance less than:

$$12 \times 10^{-3} \lambda$$

where λ is said wavelength.

8. An antenna system according to any one of claims 1 to 7 characterized by two pairs of said first and second pick-ups (234-1,232'-1;234-2,232'-2), one said pair being provided on each side of the vehicle body.

**Revendications**

1. Un système d'antenne de véhicule en diversité d'espace comprenant:
   - des premier et second moyens formant antenne (32, 138) associée au véhicule pour détecter des signaux à fréquence radioélectrique, à une fréquence supérieure à 50 MHz, et pour émettre des premier et second signaux de sortie respectifs;
   - des moyens de commutation (40, 288) agissant en réponse à une modification du niveau dudit signal de sortie, pour choisir l'un desdits signaux de sortie en vue de son utilisation;
   caractérisé en ce que:
   - lesdits premier et second moyens formant antenne comprennent des premier et second capteurs de forme allongée (32, 138), chacun d'eux monté adjacent à une structure métallique faisant partie de la caisse du véhicule pour détecter les courants de surface à fréquence radioélectrique induits dans ladite structure métallique par les signaux d'émission à fréquence radioélectrique;
   - ledit premier capteur de forme allongée (32, 234) montés sur ladite structure étant une charnière (34) du couvercle de coffre (60) de la caisse du véhicule, ledit premier capteur s'étendant parallèlement à la longueur de la charnière; et
   - ledit second capteur allongé (138, 232') étant monté sur ladite structure métallique, constituée par une partie de bordure avant (134) du panneau de toit du véhicule (132), ledit second capteur s'étendant parallèlement à ladite partie de bord.

2. Un système d'antenne selon la revendication 1, caractérisé en ce que lesdits premier et second capteurs (32, 138) sont disposés du même côté de la caisse du véhicule.

3. Un système d'antenne selon la revendication 1 ou 2, caractérisé en ce que ledit premier capteur (32) comprend un boîtier (70) muni d'une ouverture et une antenne-cadre oblongue (68) disposée à l'intérieur dudit boîtier et dont le long côté est exposé à travers l'ouverture de manière à s'étendre adjacent et parallèlement à la longueur de ladite charnière (34).

4. Un système d'antenne selon la revendication 1 ou 2, caractérisé en ce que ledit premier capteur comprend une électrode de détection s'étendant adjacente et parallèlement à la longueur de ladite charnière de manière à réaliser un couplage capacitif avec ladite charnière.

5. Un système d'antenne selon l'une quelconque des revendications 1 à 4, caractérisé en ce que ledit second capteur (138) comprend un boîtier (140) muni d'une ouverture et une antenne-cadre oblongue (142) disposée dans ledit boîtier, dont le long côté est exposé à travers ladite ouverture de manière à s'étendre adjacent et parallèlement à la longueur de ladite partie (134).

6. Un système d'antenne selon l'une quelconque des revendications 1 à 5, caractérisé en ce que ladite partie de bord avant (144) du panneau de toit (132) est fixée sur un châssis de fenêtre avant (134) et que les bords fixés sont recouverts par une moulure périphérique (166) supportée par un profilé de maintien de moulure périphérique (168), ledit second capteur (138) s'étendant adjacent et parallèlement à un bord dudit profilé de maintien de moulure périphérique (168), et ledit profilé de maintien ayant une longueur sensiblement égale à la moitié de la longueur d'onde d'un signal à fréquence radioélectrique à recevoir.

7. Un système d'antenne selon la revendication 6, caractérisé en ce que ledit second capteur (138) est espacé par rapport audit bord dudit profilé de maintien de moulure périphérique (168) d'une distance inférieure à $12 \times 10^{-3} \lambda$, $\lambda$ étant ladite longueur d'onde.

8. Un système d'antenne seln l'une quelconque des revendications 1 à 7, caractérisé par deux paires desdits premiers et seconds capteurs (234-1, 232'-1; 234-2, 232'-2), l'une desdites paires étant disposée de chaque côté de la caisse du véhicule.

**Patentansprüche**

1. Raumdiversity-Kraftfahrzeug-Antennenanlage, die umfaßt: erste sowie Zweite, mit dem Fahrzeug verbundene Antenneneinrichtungen (32, 138), um Rundfunk-Hochfrequenzsignale mit einer Frequenz über 50 MHz zu erfassen und jeweilige erste sowie zweite Ausgangssignale abzugeben; in Abhängigkeit von einer Änderung im Pegel von einem genannten Ausgangssignal betriebsfähige Schalteinrichtungen (40, 288), um eines der genannten Ausgangssignale zur Verwendung auszuwählen; dadurch gekennzeichnet, daß: die erwähnten ersten sowie zweiten Antenneneinrichtungen erste und zweite langgestreckte Empfänger (32, 138) umfassen, von denen jeder benachbart zu einer ein Teil der Fahrzeugkarosserie bildenden Metallkonstruktion montiert ist, um in dieser Metallkonstruktion durch die Rundfunk-Hochfrequenzsignale induzierte Hochfrequenz-Oberflächen-Ströme zu erfassen,

der erwähnte erste langgestreckte Empfänger (32, 234) an der besagten Metallkonstruktion, die ein Scharnier (34) für den Kofferraumdeckel (60) der Fahrzeugkarosserie ist, befestigt ist sowie dieser erste Empfänger sich parallel zur Länge des Scharniers erstreckt; und der erwähnte zweite langgestreckte Empfänger (138), 232') an der besagten Metallkonstruktion, die ein frontseitiges Randkantenteil (134) der Fahrzeugdachtafel (132) ist, befestigt ist sowie dieser zweite Empfänger sich parallel zu dem besagten Randkantenteil erstreckt.

2. Antennenanlage nach Anspruch 1, dadurch gekennzeichnet, daß die erwähnten ersten sowie zweiten Empfänger (32, 138) auf derselben Seite der Fahrzeugkarosserie angeordnet sind.

3. Antennenanlage nach Anspruch 1 oder Anspruch 2, dadurch gekennzeichnet, daß der erwähnte erste Empfänger (32) ein Gehäuse (70) mit einer Öffnung und einer innerhalb dieses Gehäuses angeordneten langgestreckten Rahmenantenne (68), von der eine längere Seite durch die besagte Öffnung hindurch exponiert ist, um sich benachbart und parallel zur Länge des genannten Scharniers (34) zu erstrecken, umfaßt.

4. Antennenanlage nach Anspruch 1 oder Anspruch 2, dadurch gekennzeichnet, daß der erwähnte erste Empfänger eine sich benachbart sowie parallel zur Länge des genannten Scharniers erstreckende Empfangselektrode umfaßt, um mit dem genannten Scharnier eine kapazitive Kopplung zu erlangen.

5. Antennenanlage nach einem der Ansprüche 1 bis 4, dadurch gekennzeichnet, daß der erwähnte zweite Empfänger (138) ein Gehäuse (140) mit einer Öffnung und einer innerhalb dieses Gehäuses angeordneten langgestreckten Rahmenantenne (142), von der eine längere Seite durch die besagte Öffnung hindurch exponiert ist, um sich benachbart und parallel zur Länge des besagten Teils (134) zu erstrekken, umfaßt.

6. Antennenanlage nach einem der Ansprüche 1 bis 5, dadurch gekennzeichnet, daß das erwähnte frontseitige Randkantenteil (144) der Dachtafel (132) an einem Frontfensterrahmen (134) befestigt ist und die befestigten Kanten durch ein von einem langgestreckten Kantenformteilträger (168) gehaltenes Kantenformteil (166) abgedeckt sind, der erwähnte zweite Empfänger (138) sich benachbart sowie parallel zu einer Kante des besagten langgestreckten Kantenformteilträgers (168) erstreckt und der besagte Träger eine Länge hat, die im wesentlichen gleich einer Hälfte der Wellenlänge eines zu empfangenden Hochfrequenzsignals ist.

7. Antennenanlage nach Anspruch 6, dadurch gekennzeichnet, daß der erwähnte zweite Empfänger (138) von der genannten Kante des besagten langgestreckten Kantenformteilträgers (168) mit einer Entfernung beabstandet ist, die geringer als

   $12 \times 10^{-3} \lambda$

   ist, worin $\lambda$ die besagte Wellenlänge ist.

8. Antennenanlage nach einem der Ansprüche 1 bis 7, gekennzeichnet durch zwei Paare der erwähnten ersten sowie zweiten Empfänger (234-1, 232'-1; 234-2, 232'-2), wobei ein genanntes Paar auf jeder Seite der Fahrzeugkarosserie vorgesehen ist.

# FIG. 1

# FIG.2

FRONT

REAR

# FIG.3

FRONT

REAR

# F I G . 4

# F I G . 5

16

# F I G . 6

# F I G . 7

# FIG.8

# FIG.9

## F I G. 10

232'-2    232-2    234-2

232'-1    232-1

234-1

## F I G. 11

236

264    232-1

238

242

240

# FIG. 12

RELATIVE ANTENNA SENSITIVITY
(RELATIVE SURFACE CURRENT ) (dB)

GAP BETWEEN RETAINER AND
REAR WINDOW FRAME

$(\times 10^{-3} \times$ WAVELENGTH )

## F I G . 13

248

250

358

232'-1(232'-2)  244  266a

340

266  246

354

342

362  364-1  260

364-2

## F I G . 14

270

268-1

234-1  268-2

234-2

F I G. 15

EP 0 209 989 B1

# FIG. 16

SPEED SIGNAL

PARKING BRAKE SW

HPF

COMP

+B

P-RANGE SW

306

TO 310

# FIG. 17

## (A)

RADIO WAVE
0° TRANSMISSION ANGLE

232

270° Fr 90°

a

180°

## (B)

0°

b

270° Fr 90°

234

180°

23

# FIG.18

(E,H)

W

# FIG.19

24

# F I G . 20

# F I G . 21

# F I G . 22

# F I G . 23

FIG. 25

FIG. 26

FIG. 24